Europäisches Patentamt

**European Patent Office**

**Office européen des brevets**

(11) Numéro de publication: **0 312 478 B1**

(12)

# FASCICULE DE BREVET EUROPEEN

(45) Date de publication de fascicule du brevet: **05.08.92**  (51) Int. Cl.⁵: **A01K 31/00**, F24F 11/04

(21) Numéro de dépôt: **88460023.0**

(22) Date de dépôt: **12.10.88**

(54) **Procédé et dispositif pour réaliser la ventilation d'un bâtiment ventilé par dépression, notamment d'un local d'élevage avicole.**

(30) Priorité: **12.10.87 FR 8714232**

(43) Date de publication de la demande:
**19.04.89 Bulletin 89/16**

(45) Mention de la délivrance du brevet:
**05.08.92 Bulletin 92/32**

(84) Etats contractants désignés:
**DE ES FR GB NL**

(56) Documents cités:
**FR-A- 2 329 196**
**US-A- 3 352 225**

(73) Titulaire: **ATELIERS DE CONSTRUCTIONS L. DANNO**
**Rue Arthur Enaud**
**F-22600 Loudeac(FR)**

(72) Inventeur: **Philibert, Michel, Pierre, Emile**
**23, Clos du Poirier**
**F-56250 Saint-Nolff(FR)**

(74) Mandataire: **Le Faou, Daniel et al**
**Cabinet Regimbeau 11, rue Franz Heller,**
**Centre d'Affaires Patton B.P. 19107**
**F-35019 Rennes Cédex(FR)**

## Description

L'invention concerne la ventilation d'un bâtiment ventilé par dépression, et notamment d'un local d'élevage avicole.

Les bâtiments d'élevage avicole d'une largeur moyenne de 14 m (12 à 17 m) sont habituellement ventilés par mise en dépression obtenue :

- soit par tirage naturel (lanterneau en faîtage du bâtiment) ;
- soit par des ventilateurs hélicoïdaux placés en toiture.

L'air est introduit latéralement par des trappes basculantes disposées des deux côtés sur toute la longueur.

Le débit d'air varie d'environ 0,2 m³ par heure et par m² d'élevage, lorsque les animaux sont à l'état de poussins, jusqu'à 140 m³ par heure et par m² lorsque les animaux ont atteint leur taille maximale, et que la température extérieure est de 25 ou 27° C, soit une variation de débit d'air introduit de 1 à 700 environ.

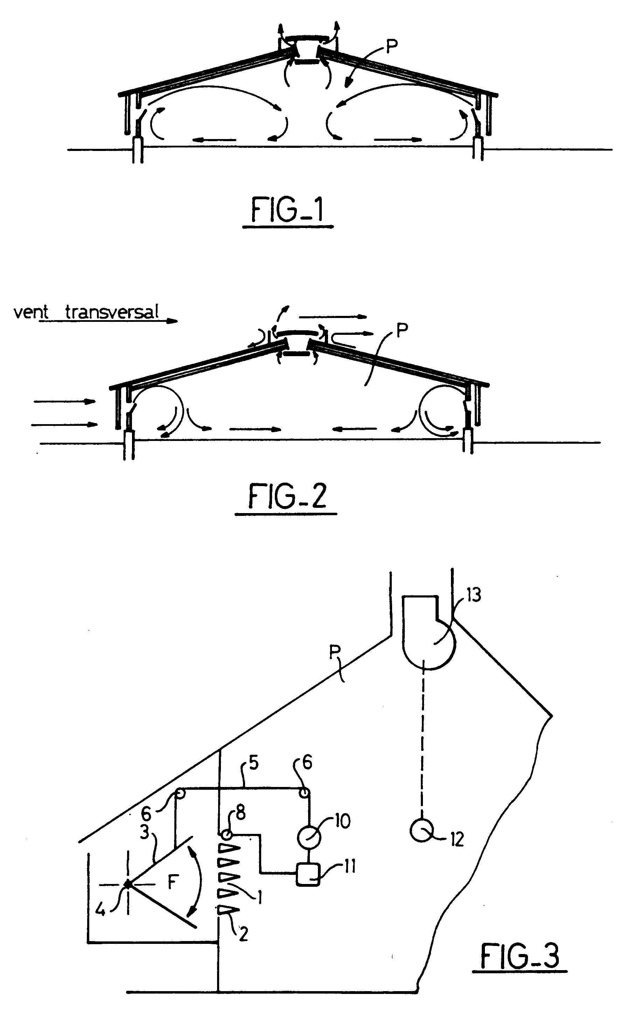

Le mouvement d'air souhaité par tous les professionnels de ce type d'élevage est représenté sur la figure 1, c'est-à-dire que l'air introduit à la température extérieure ne retombe qu'au milieu du bâtiment après s'être réchauffé, et son introduction provoque une induction de l'air ambiant, de telle sorte que l'air qui circule au contact des animaux ne soit jamais de l'air froid. De plus, la vitesse d'entrée de l'air doit être la plus constante possible.

Dans la réalité, ce schéma de la circulation n'est jamais respecté en hiver.

L'air retombe à 2 m ou 2,50 m des parois en provoquant une induction trop courte (comme indiqué sur la figure 2).

On décrit dans le document US-A-3 352 225 un dispositif de ventilation d'un local d'élevage qui est équipé de moyens de contrôle de la température dans le local. Ces moyens comprennent un détecteur, à savoir une sonde thermique agencée pour piloter la vitesse du ventilateur qui réalise l'extraction de l'air hors du local, afin d'abaisser cette vitesse si la température baisse et inversement. Parallèlement, pour éviter une variation corrélative de la vitesse d'entrée de l'air dans le local, ce dernier est équipé de bouches de soufflage pourvues de volets obturateurs mobiles, permettant ainsi une modification progressive de la surface d'entrée d'air. Le déplacement des volets est également commandé par la sonde thermique qui agit par l'intermédiaire de moyens de commande.

Ce document porte donc sur un principe de ventilation consistant à faire varier la position d'une trappe d'entrée d'air en fonction de l'extraction, la même régulation de température commandant une variation de vitesse de ventilation et une trappe d'obturation des entrées d'air. D'après les dessins, il apparaît que l'air rentre dans le local selon une direction voisine de l'horizontale. En outre, la vitesse d'entrée de l'air est en principe constante. Toutefois, dans ce document, on ne définit pas la loi de correspondance entre la variation de vitesse du ventilateur et la position de la trappe. Or, l'expérience montre que, dans un tel système, la loi de correspondance est très complexe et qu'il est difficile en pratique d'obtenir une vitesse d'entrée d'air effectivement constante ; le résultat obtenu est alors aléatoire.

En outre, ce document ne donne aucune indication quant à la portée de soufflage de l'air rentrant.

Le document FR-A-2 329 196 évoque la possibilité de mesurer la vitesse de l'air dans un local dans le but de réguler le "climat" à l'intérieur de ce local, en agissant sur un appareil de ventilation d'une manière tenant compte du résultat de la mesure. Les moyens pour ce faire peuvent consister en un dispositif de régulation comparant la vitesse d'air calculée et la vitesse d'air mesurée. Toutefois, l'emplacement et l'agencement des moyens permettant d'atteindre ce but ne sont pas indiqués dans ce document.

La présente invention vise à éliminer les inconvénients des procédés et dispositifs connus, afin d'assurer une bonne circulation de l'air de ventilation dans le bâtiment, même en hiver.

On y parvient en introduisant latéralement l'air de ventilation dans le bâtiment à ventiler, suivant une direction de soufflage sensiblement horizontale et avec une vitesse d'introduction sensiblement constante. Selon l'invention, les direction de soufflage et vitesse d'introduction d'air sont telles que l'on obtient une portée de soufflage comprise entre le quart et la moitié de la largeur de l'enceinte, cette vitesse d'introduction étant régulée à partir d'une mesure anémométrique faite sensiblement au centre de la veine d'air de soufflage.

L'invention concerne également un dispositif pour réaliser cette ventilation.

Ce dispositif, du type comprenant :

- une bouche latérale de soufflage d'air déterminant une surface d'entrée d'air extérieur dans la bouche et une sortie d'air orientable dans l'enceinte à ventiler,
- des moyens d'obturation commandables permettant une modification progressive de la surface d'entrée d'air de la bouche de soufflage,
- un détecteur à la sortie de la bouche de soufflage,
- des moyens de commande desdits moyens d'obturation, et
- un circuit de régulation comprenant ledit détecteur et lesdits moyens de commande et conçu en sorte que la vitesse d'air soit maintenue à une valeur choisie par modification de la surface d'entrée d'air de la bouche de soufflage,

est caractérisé en ce que ledit détecteur est un détecteur de vitesse d'air et en ce que le dispositif comprend des moyens pour maintenir ce détecteur au centre de la veine de soufflage lorsque la surface d'entrée d'air varie, ces moyens étant constitués par un pantographe ou un palan à câbles.

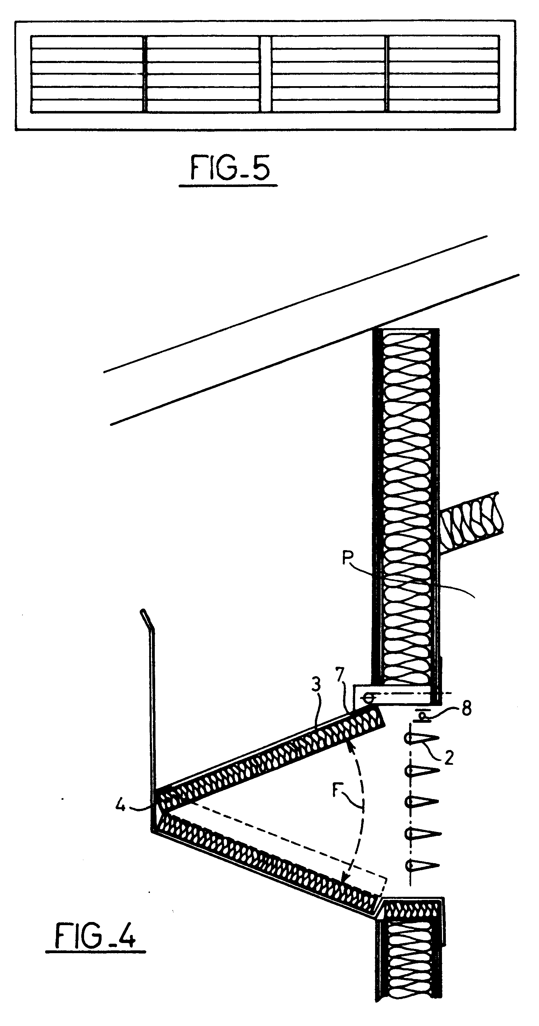

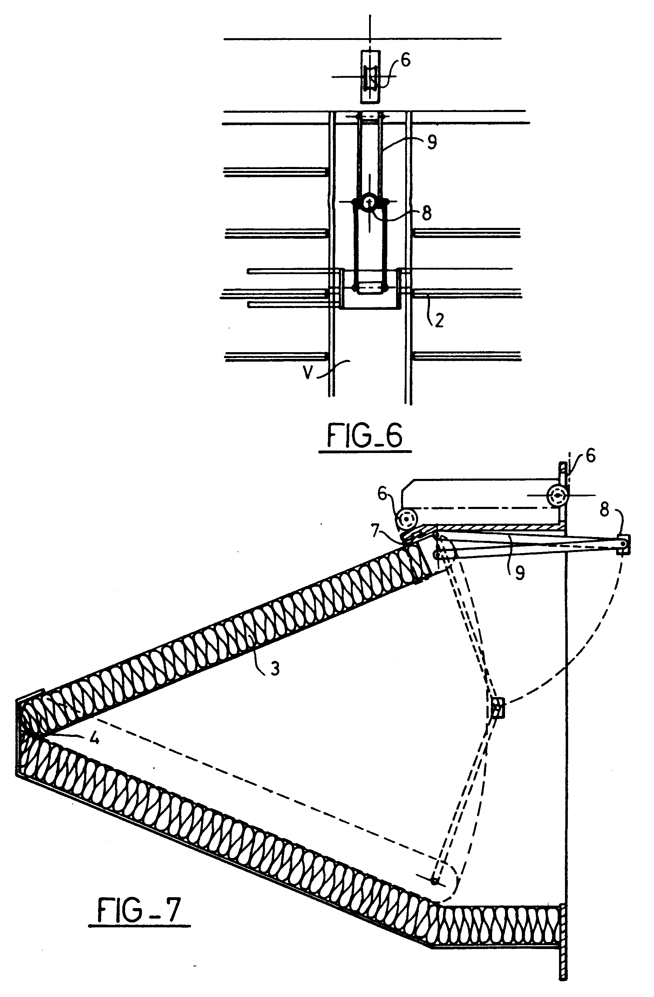

On décrira ci-après un exemple de réalisation de ce dispositif en référence aux figures 3 à 7 du dessin joint sur lequel :

- la figure 3 représente, en coupe schématique, un bâtiment d'élevage avicole équipé selon l'invention,
- la figure 4 est une coupe de principe d'une bouche de soufflage et d'une trappe associée,
- la figure 5 est une vue de face d'une bouche de soufflage,
- la figure 6 est un agrandissement de la partie centrale de la bouche de soufflage de la figure 5, et
- la figure 7 est une coupe de cette partie centrale par un plan vertical perpendiculaire au plan de la bouche de soufflage.

Le dispositif représenté sur les figures pour la ventilation d'un local (p) où sont élevés des poussins, comprend :

- une bouche de ventilation verticale 1 en matériau imputrescible et résistant à la corrosion, d'une surface unitaire de 0,24 m² environ et comportant des ailettes orientables 2. Cette bouche est située dans une ouverture de la paroi latérale du local ;
- une trappe 3 en matériau isolant non déformable qui peut pivoter autour d'un axe horizontal 4. Son débattement (flèche F) permet l'ouverture progressive de la surface d'entrée de la bouche de soufflage. L'ouverture se fait par son propre poids et la fermeture par la traction sur un câble de manoeuvre 5 passant sur des poulies 6 ; un joint 7 assure la bonne étanchéité de l'ensemble à la fermeture.
- un ensemble de régulation anémométrique constitué :
- d'une sonde de vitesse d'air 8 située sensiblement dans le plan médian vertical V de la bouche (une bouche seulement sur quinze est équipée de cette sonde, par exemple). la sonde de vitesse, par exemple une hélice ou un fil chauffant qui fournissent un signal d'impulsions, placée dans un anneau de protection se déplace en même temps que la trappe, mais des moyens, par exemple un pantographe 9 à rapport 1/2, permettent de maintenir la sonde au centre de la veine d'air de soufflage,

- d'un treuil motorisé 10 à deux sens de rotation commandant simultanément les quinze trappes,
- d'un régulateur électronique 11. Le régulateur comprend des moyens en soi connus, non représentés, pour comparer le signal de vitesse fourni par la sonde 8 à un signal de référence réglable afin d'obtenir un signal de comparaison qui, après amplification, est apte à commander le moteur du treuil dans le sens qui convient pour que le signal de vitesse devienne égal au signal de référence.

Un seul régulateur électronique est suffisant pour commander une quinzaine de trappes, ce qui correspond généralement au quart des trappes d'un bâtiment.

Le régulateur permet la sélection de la vitesse. Il est du type proportionnel intégral pour éviter une trop grande instabilité. Les seuils d'enclenchement et de déclenchement sont réglables.

Selon une caractéristique préférée mais facultative de l'invention, des moyens indépendants sont prévus pour la régulation de l'ambiance du bâtiment. Elle se fait par exemple avec deux grandeurs réglantes : l'hygrométrie et la température et elle agit sur l'extraction. Sur le schéma de la figure 3, on a supposé que le débit de sortie de l'air de ventilation hors du local est réglé à partir d'une information de température fournie par une sonde de température 12 qui commande le ventilateur d'extraction 13 du toit ou tout moyen équivalent. De manière similaire, ce réglage peut être réalisé à partir d'une information du degré hygrométrique du local, fournie par une sonde appropriée. il peut également être réalisé à partir des deux informations (température et hygrométrie) prises simultanément.

L'invention permet :

- d'introduire l'air horizontalement, en la faisant porter à la distance choisie, dépendante de la vitesse de soufflage ;
- de régler les appareils de chauffage d'une manière indépendante pendant toute la première partie de l'élevage où les apports intérieurs ne sont pas suffisants pour compenser les déperditions ;
- d'éviter les sous-ventilations et sur-ventilations en cas d'hygrométrie extérieure trop faible ou trop forte ;
- de maintenir les températures ambiantes dans les limites choisies.

Ce système s'adapte aussi bien à une ventilation naturelle qu'une ventilation mécanique, en raison de la très faible perte de charge engendrée sur l'air introduit.

Dans une variante, on pourrait remplacer le pantographe par un guide et un palan adapté pour maintenir la sonde dans le plan de la bouche et dans l'axe central de la veine d'air, ce palan pouvant consister en un jeu de câbles et de poulies divisant par deux la course de déplacement de la trappe.

**Revendications**

1. Procédé pour réaliser la ventilation d'un bâtiment ventilé par dépression, et notamment d'un local d'élevage avicole par une introduction d'air latéral dans le local, selon lequel on introduit l'air suivant une direction de soufflage sensiblement horizontale et avec une vitesse d'introduction sensiblement constante, caractérisé en ce que lesdites direction et vitesse sont telles que l'on obtient une portée de soufflage comprise entre le quart et la moitié de la largeur du bâtiment, cette vitesse d'introduction étant régulée à partir d'une mesure anémométrique faite sensiblement au centre de la veine d'air de soufflage.

2. Procédé selon la revendication 1, dans lequel on évacue l'air de ventilation par le toit, caractérisé en ce qu on règle le débit de sortie de l'air à partir d'une information de température et/ou d'hygrométrie, à l'intérieur du bâtiment.

3. Dispositif pour réaliser la ventilation d'un bâtiment (P) ventilé par dépression, et notamment d'un local d'élevage avicole comportant de préférence une sortie d'air de ventilation hors du local située en toit, du type comprenant :
   - une bouche de soufflage (1) latérale déterminant une surface d'entrée d'air extérieur dans la bouche et une sortie d'air orientable dans le local à ventiler,
   - des moyens d'obturation (3) commandables permettant une modification progressive de la surface d'entrée d'air de la bouche de soufflage (1),
   - un détecteur (8) à la sortie de la bouche de soufflage (1),
   - des moyens de commande (10) desdits moyens d'obturation (3), et
   - un circuit de régulation (11) comprenant ledit détecteur (8) et lesdits moyens de commande (10) et conçu en sorte que la vitesse d'air soit maintenue à une valeur choisie par modification de la surface d'entrée d'air de la bouche de soufflage (1),

   caractérisé en ce que ledit détecteur (8) est un détecteur de vitesse d'air et en ce que le dispositif comprend des moyens (9) pour maintenir ce détecteur au centre de la veine de soufflage lorsque la surface d'entrée d'air varie, ces moyens étant constitués par un pantographe ou un palan à câbles.

4. Dispositif selon la revendication 3, caractérisé en ce que la bouche de soufflage comprend des ailettes orientables (2) pour régler l'orientation de l'air.

5. Dispositif selon la revendication 3 ou 4, caractérisé en ce que les moyens d'obturation sont constitués par une trappe (3) qui peut pivoter autour d'un axe horizontal (4).

6. Dispositif selon l'une des revendications 3 à 5, caracterisé en ce que les moyens d'obturation sont constitués par une trappe (4) pivotante et en ce que le dispositif comporte un moteur (10) pour actionner la trappe à partir d'un signal fourni par la sonde de vitesse d'air (8).

7. Dispositif selon l'une des revendications 3 à 6, caracterisé en ce qu'il comporte plusieurs bouches de soufflage (1) dont les trappes (3) sont actionnées d'un même moteur (10).

8. Les locaux d'élevage avicole comportant un dispositif selon l'une des revendications 3 à 7 et ventilés selon un procédé tel que défini dans l'une des revendications 1 et 2.

**Claims**

1. Method of ventilating a building ventilated by low pressure, in particular a room for rearing poultry, by the introduction of side air into the room, according to which method the air is introduced in a substantially horizontal blowing direction and at a substantially constant introduction speed, characterized in that the said direction and speed are such that a blowing range of between a quarter and a half of the width of the building is obtained, this introduction speed being regulated on the basis of an anemometer measurement effected substantially at the centre of the stream of blowing air.

2. Method according to Claim 1, in which the ventilating air is evacuated through the roof, characterized in that the outflow of air is regulated on the basis of temperature and/or hygrometry information inside the building.

3. Apparatus for ventilating a building (P) ventilated by low pressure, in particular a room for rearing poultry, preferably having an outlet for ventilating air from the room which is situated in the roof, of the type comprising:

- a lateral blowing mouth (1) determining an inlet surface for exterior air into the mouth and an air outlet which may be oriented into the room to be ventilated,
- controllable closing means (3) enabling a progressive modification of the air inlet surface of the blowing mouth (1),
- a sensor (8) at the outlet of the blowing mouth (1),
- control means (10) for the said closing means (3), and
- a regulating circuit (11) which comprises the said sensor (8) and the said control means (10) and is designed such that the air speed is kept at a selected value by modifying the air inlet surface of the blowing mouth (1), characterized in that the said sensor (8) is an air speed sensor, and in that the apparatus comprises means (9) for keeping this sensor at the centre of the blowing stream when the air inlet surface alters, these means being formed by a current collector or a cable hoist.

4. Apparatus according to Claim 3, characterized in that the blowing mouth comprises fins (2) which may be oriented for regulating the orientation of the air.

5. Apparatus according to Claim 3 or 4, characterized in that the closing means are formed by a flap (3) which is able to pivot about a horizontal axis (4).

6. Apparatus according to one of Claims 3 to 5, characterized in that the closing means are formed by a pivotal flap (4), and in that the apparatus has a motor (10) for activating the flap on the basis of a signal supplied by the air speed probe (8).

7. Apparatus according to one of Claims 3 to 6, characterized in that it has a plurality of blowing mouths (1), whereof the flaps (3) are activated by the same motor (10).

8. Rooms for rearing poultry, having an apparatus according to one of Claims 3 to 7 and ventilated according to a method such as is defined in one of Claims 1 and 2.

**Patentansprüche**

1. Verfahren zum Durchführen der Belüftung eines durch Unterdruck belüfteten Gebäudes und insbesondere eines Raumes zur Geflügelzucht durch Einführen seitlicher Luft in den Raum, demzufolge man die Luft entlang einer im wesentlichen horizontalen Anblasrichtung mit einer im wesentlichen konstanten Einführungsgeschwindigkeit einführt, dadurch gekennzeichnet, daß die Richtung und die Geschwindigkeit derart sind, daß man eine Ausdehnung des Luftstroms zwischen dem Viertel und der Hälfte der Gebäudebreite erhält, wobei die Einführungsgeschwindigkeit ausgehend von einer anemometrischen Messung, die im wesentlichen im Zentrum des Anblasluftstromes durchgeführt wird, geregelt wird.

2. Verfahren nach Anspruch 1, bei dem man die Belüftungsluft über das Dach entfernt, dadurch gekennzeichnet, daß man die Luftausgangsmenge ausgehend von einer Temperatur- und/oder hygrometrischen Information im Inneren des Gebäudes regelt.

3. Vorrichtung zum Durchführen der Belüftung eines durch Unterdruck belüfteten Gebäudes (P) und insbesondere eines Raumes zur Geflügelzucht, der vorzugsweise einen Luftbelüftungsausgang außerhalb des Raumes im Dach befindlich hat, des Typs, welcher umfaßt:
   - eine seitliche Anblasöffnung (1), die eine Eingangsfläche für Luft von draußen und einen orientierbaren Luftausgang in den zu belüftenden Raum bildet,
   - regelbare Verschlußvorrichtungen (3), die eine fortschreitende Änderung der Eingangsfläche für Luft der Anblasöffnung (1) erlaubt,
   - einen Detektor (8) am Ausgang der Anblasöffnung (1),
   - Steuerungsvorrichtungen (10) für die Verschlußvorrichtungen (3), und
   - einen Regelungsschaltkreis (11), der den Detektor (8) und die Steuerungsvorrichtungen (10) umfaßt und derart aufgebaut ist, daß die Luftgeschwindigkeit durch Modifikation der Eingangsfläche für Luft der Anblasöffnung (1) auf einem gewählten Wert gehalten wird,
   dadurch gekennzeichnet, daß der Detektor (8) ein Luftgeschwindigkeitsdetektor ist und daß die Vorrichtung Vorrichtungen (9) zum Halten dieses Detektor in der Mitte des Luftstromes umfaßt, wenn sich die Eingangsfläche für Luft verändert, wobei diese Vorrichtungen aus einem Pantographen oder einem Seilflaschenzug bestehen.

4. Vorrichtung nach Anspruch 3, dadurch gekennzeichnet, daß die Anblasöffnung ausrichtbare Flügel (2) umfaßt, um die Ausrichtung der Luft zu regeln.

5. Vorrichtung nach Anspruch 3 oder 4, dadurch gekennzeichnet, daß die Verschlußvorrichtungen aus einer Klappe (3) bestehen, die um eine horizontale Achse (4) schwenken kann.

6. Vorrichtung nach einem der Ansprüche 3 bis 5, dadurch gekennzeichnet, daß die Verschlußvorrichtungen aus einer schwenkbaren Klappe (4) bestehen und daß die Vorrichtung einen Motor (10) zum Betätigen der Klappe ausgehend von einem von der Luftgeschwindigkeitssonde (8) erzeugten Signal umfaßt.

7. Vorrichtung nach einem der Ansprüche 3 bis 6, dadurch gekennzeichnet, daß sie mehrere Anblasöffnungen (1) aufweist, deren Klappen (3) von demselben Motor (10) betätigt werden.

8. Geflügelaufzuchträume mit einer Vorrichtung nach einem der Ansprüche 3 bis 7, die nach einem Verfahren, wie es in einem der Ansprüche 1 und 2 definiert ist, belüftet werden.

FIG_1

vent transversal

FIG_2

FIG_3

FIG.5

FIG.4

FIG_6

FIG_7